# EUROPEAN PATENT APPLICATION

(11) **EP 4 742 503 A1**
(43) Date of publication of application: **13.05.2026**
(21) Application number: 25209952.8
(22) Date of filing: 21.10.2025
(51) Int. Cl.: H02K 1/276, H02K 15/03, H02K 15/12

(54) **METHOD OF MANUFACTURING ROTATION ELECTRIC MACHINE ROTOR AND ROTATION ELECTRIC MACHINE ROTOR**

(30) Priority: 08.11.2024 JP 2024195698; 25.08.2025 JP 2025139608
(71) Applicant: AISIN CORPORATION, Aichi 448-8650 (JP)
(72) Inventor: Adachi, Akifumi, Kariya, 448-8650 (JP)
(74) Representative: Kramer Barske Schmidtchen Patentanwälte PartG mbB

(57) **Abstract**

Disclosed is a method of manufacturing a rotation electric machine rotor, the method including a step of preparing a rotor core (32) having an annular shape when viewed in an axial direction and having a magnet hole (321, 322) in the axial direction and a first through hole (324) in the axial direction, an injection step of injecting a first molten material brought into a molten state by heating into the first through hole (324), and a magnet disposing step of disposing a permanent magnet (61, 62) in the magnet hole (321, 322) by injecting a second molten material brought into a molten state by heating into the magnet hole (321, 322) after the injection step, wherein the magnet disposing step includes fixing a magnet for the permanent magnet (61, 62) inserted into the magnet hole (321, 322) in the magnet hole (321, 322) as the second molten material is cured, or forming a bonded magnet for the permanent magnet (61, 62) in the magnet hole (321, 322) as the second molten material containing a magnet powder is cured.

## Description

### TECHNICAL FIELD

The present disclosure relates to a method of manufacturing a rotation electric machine rotor and a rotation electric machine rotor.

### BACKGROUND DISCUSSION

A known technique is disclosed in JP 2008-54376 A in which a resin material in the molten state is injected into a magnet hole of a rotor core to fix a permanent magnet in the magnet hole.

In the step of injecting a resin material in the molten state into the rotor core, the rotor core is required to be preheated for curing when the resin material is a thermosetting resin, and for enhancing fluidity when the resin material is a thermoplastic resin. As such a preheating method, for example, there is a method of applying heat from the outside (surroundings) of the rotor core by a heating device in a state where the rotor core is sandwiched between the upper mold and the lower mold.

However, in the preheating method as described above, heat transfer to the inside of the rotor core takes a relatively long time, and it is difficult to reduce the preheating time.

Therefore, in an aspect, an object of the present disclosure is to reduce the preheating time in a method of manufacturing a rotation electric machine rotor and to provide a rotation electric machine rotor having a structure capable of reducing a preheating time.

A need thus exists for a rotation electric machine rotor which is not susceptible to the drawback mentioned above.

### SUMMARY

In an aspect, disclosed is a method of manufacturing a rotation electric machine rotor, the method including a step of preparing a rotor core having an annular shape when viewed in an axial direction and having a magnet hole in the axial direction and a first through hole in the axial direction, an injection step of injecting a first molten material brought into a molten state by heating into the first through hole, and a magnet disposing step of disposing a permanent magnet in the magnet hole by injecting a second molten material brought into a molten state by heating into the magnet hole after the injection step, wherein the magnet disposing step includes fixing a magnet for the permanent magnet inserted into the magnet hole in the magnet hole as the second molten material is cured, or forming a bonded magnet for the permanent magnet in the magnet hole as the second molten material containing a magnet powder is cured.

In an aspect, according to the present disclosure, it is possible to reduce a preheating time in a method of manufacturing a rotation electric machine rotor, or to provide the rotation electric machine rotor having a structure capable of reducing a preheating time.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view schematically illustrating a cross-sectional structure of a motor according to an embodiment;
Fig. 2 is a perspective view of a rotor from which an end plate and a nut are removed;
Fig. 3 is a perspective view of the end plate when viewed from the axially outside;
Fig. 4 is a perspective view of the end plate when viewed from the axially inside;
Fig. 5 is a perspective view illustrating an end plate integrated with a rotor shaft;
Fig. 6 is a schematic flowchart illustrating a flow of an example of a method of manufacturing a rotor;
Fig. 8 is a cross-sectional view of part of a workpiece passing through one through hole;
Fig. 9 is an enlarged view of part Q9 in Fig. 8;
Fig. 10 is an explanatory view of a positional relationship between two injection molding machines for a workpiece on a conveyance unit in a resin injection step;
Fig. 11 is an explanatory diagram of a positional relationship between two injection molding machines for a workpiece on a conveyance unit in a magnet fixing step; and
Fig. 12 is a schematic flowchart illustrating a flow of another example of the method of manufacturing the rotor.

### DETAILED DESCRIPTION

Hereinafter, each embodiment will be described in detail with reference to the accompanying drawings. Note that the dimensional ratios in the drawings are merely examples, and the dimensional ratios are not limited thereto, and shapes and the like in the drawings may be partially exaggerated for convenience of description. In addition, in the drawings, only some of a plurality of parts having the same attribute may be denoted by reference numerals for the sake of clarity.

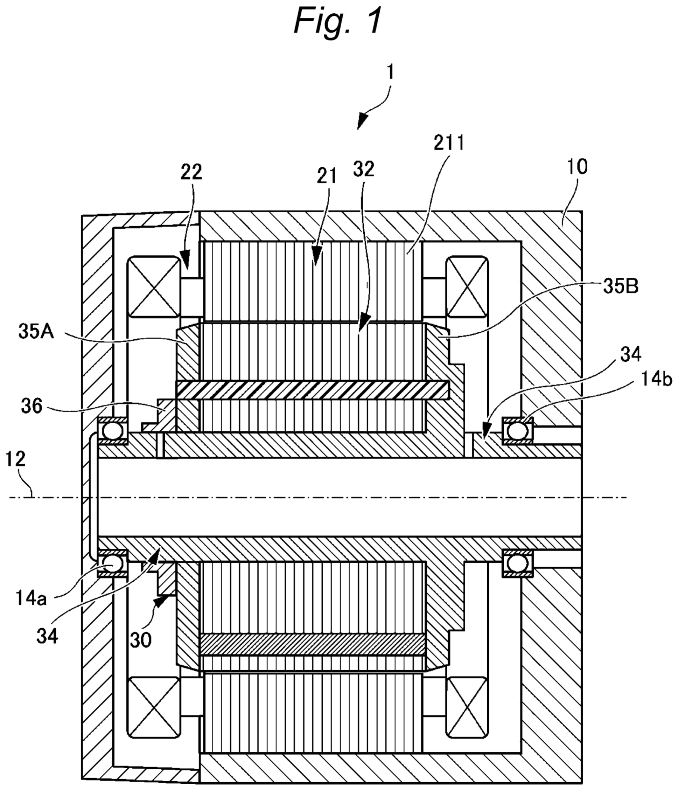

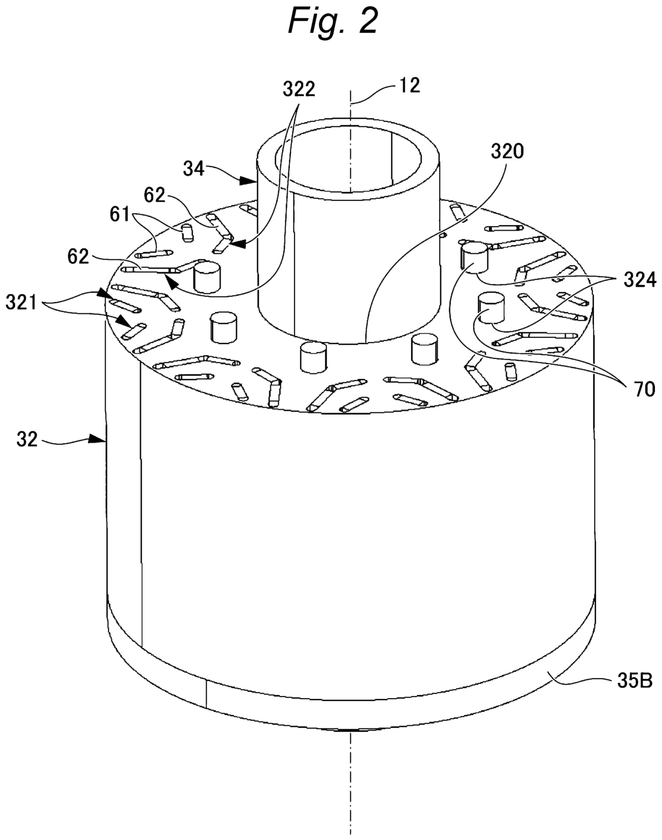

Fig. 1 is a cross-sectional view schematically illustrating a cross-sectional structure of a motor 1 according to an embodiment. Fig. 2 is a perspective view of a rotor 30 in a state where an end plate 35A and a nut 36 are removed. Note that, in Fig. 2 and the like, for the sake of visibility, there is a case where only some of a plurality of parts having the same attribute is assigned with reference numerals.

Fig. 1 illustrates a rotation axis 12 of the motor 1. In the following description, the axial direction refers to a direction in which a rotation axis (rotation center) 12 of the motor 1 extends, and the radial direction refers to a radial direction around the rotation axis 12. Therefore, the radially outer side refers to a side away from the rotation axis 12, and the radially inner side refers to a side toward the rotation axis 12. The circumferential direction corresponds to a rotation direction around the rotation axis 12.

The motor 1 may be, for example, a motor for driving a vehicle used in a hybrid vehicle or an electric vehicle. However, the motor 1 may be used for any other application.

The motor 1 is, for example, an inner rotor type, and is provided so that a stator 21 surrounds the radially outer side of the rotor 30. A radially outer side of the stator 21 is fixed to a motor housing 10. The stator 21 includes a stator core 211 made of, for example, annular magnetic stacked steel plates, and a plurality of slots (not illustrated) around which a coil 22 is wound is formed at a radially inner side of the stator core 211.

The rotor 30 is disposed radially inside the stator 21.

The rotor 30 includes a rotor core 32, a rotor shaft 34, end plates 35A and 35B, a nut 36, permanent magnets 61 and 62, and a resin material portion 70.

The rotor core 32 is fixed to the radially outer surface of the rotor shaft 34 and rotates integrally with the rotor shaft 34. The rotor core 32 has a shaft hole 320 (see Fig. 2), and the rotor shaft 34 is fitted into the shaft hole 320. Note that the rotor core 32 and the rotor shaft 34 may be coupled in a mode having a radial interference by a coupling method such as press fitting or shrink fitting. In addition, the rotor core 32 and the rotor shaft 34 may be coupled by using a key and a key groove in the axial direction in a mode in which relative displacement in the rotational direction does not occur.

The rotor shaft 34 is rotatably supported by the motor housing 10 via bearings 14a and 14b. The rotor shaft 34 defines the rotation axis 12 of the motor 1. In the illustrated example, the rotor shaft 34 has a hollow shape, but may be solid. The rotor shaft 34 has a constant diameter, but may have a step in the radial direction.

The rotor core 32 is formed of annular magnetic stacked steel plates, for example. In the modification, the rotor core 32 may be formed of a green compact in which the magnetic powder is compressed and solidified. The permanent magnets 61 and 62 (see Fig. 2) are disposed inside the rotor core 32. That is, the rotor core 32 has magnet holes 321 and 322 (see Fig. 2) penetrating in the axial direction, and the permanent magnets 61 and 62 are formed in the magnet holes 321 and 322.

In the present embodiment, the rotor core 32 has a through hole 324 penetrating in the axial direction. The through hole 324 is formed radially inside the magnet holes 321 and 322. A plurality of through holes 324 is formed at the same radial position at a predetermined circumferential pitch. At this time, the through holes 324 are formed in a mode having the same positional relationship with the magnet holes 321 and 322 closest to each other. In the present embodiment, the through hole 324 is disposed in a mode positioned on the q-axis. In the modification, instead of or in addition to the q-axis, the hole may be disposed at another position (for example, on the d-axis). In the modification, a larger number of through holes 324 may be formed at different positions in the radial direction in a mode having an arrangement of two or more layers.

As illustrated in Fig. 2, the rotor core 32 is rotationally symmetric about the rotation axis 12 when viewed in the axial direction. In the example illustrated in Fig. 2, the rotor core 32 has a form in which the magnet holes 321 and 322 and the through hole 324 overlap each time the rotor core rotates 45 degrees about the rotation axis 12.

The end plates 35A and 35B cover both axial end faces of the rotor core 32 in the axial direction. The end plates 35A, 35B close the magnet holes 321, 322 in the axial direction. In the present embodiment, the end plate 35B is formed integrally with the rotor shaft 34, but may be formed separately. The characteristic configurations of the end plates 35A and 35B will be described later.

The nut 36 is fastened to the rotor shaft 34. The nut 36 faces the axial end face of the rotor core 32 via the end plate 35A. The nut 36 may generate an axial force between the end plate 35A and the end plate 35B.

The permanent magnets 61 and 62 are formed of sintered magnets, but may be formed of bonded magnets. In the case of a sintered magnet, each of the plurality of permanent magnets 61 and 62 is fixed in the magnet holes 321 and 322 by a resin material. The method of injection molding of the resin material in this case is any method, and may include, for example, transfer molding, resin injection by compression molding using a cylinder, and the like. On the other hand, in the case of a bonded magnet, each of the plurality of permanent magnets 61 and 62 is formed by injection molding a material for a bonded magnet (hereinafter, also simply referred to as a "bonded magnet material") obtained by mixing a magnet powder and a bonding material. The injection molding method in this case is any method, and may include, for example, transfer molding, resin injection by compression molding using a cylinder, and the like.

In the example illustrated in Fig. 2, the plurality of permanent magnets 61 and 62 is disposed in a substantially V shape (a substantially V shape of a mode in which the radially outer side is opened) in which two types of permanent magnets 61 and 62 form a pair when viewed in the axial direction. In this case, a common magnetic pole is formed between the pair of permanent magnets 61 and between the pair of permanent magnets 62. Note that the plurality of permanent magnets 61 and 62 is disposed in a mode in which S poles and N poles alternately appear in the circumferential direction. In the present embodiment, the number of magnetic poles is eight, but the number of magnetic poles is any number. In the example illustrated in Fig. 2, the permanent magnets 61 and 62 are disposed in two layers at different positions in the radial direction, but only one layer may be disposed, and the magnet arrangement mode is any mode.

The resin material portion 70 is formed by injecting a resin material melted by heating into the through hole 324. In this case, the resin material cured in the through hole 324 forms the resin material portion 70. As will be described later, the resin material portion 70 functions as a heat source for preheating the rotor core 32 at the time of manufacturing the rotor 30. Therefore, the resin material portion 70 may not have a special function in the rotor 30 in the product state, but may have a function in relation to the end plates 35A and 35B as described later. Details of the resin material portion 70 will be described later.

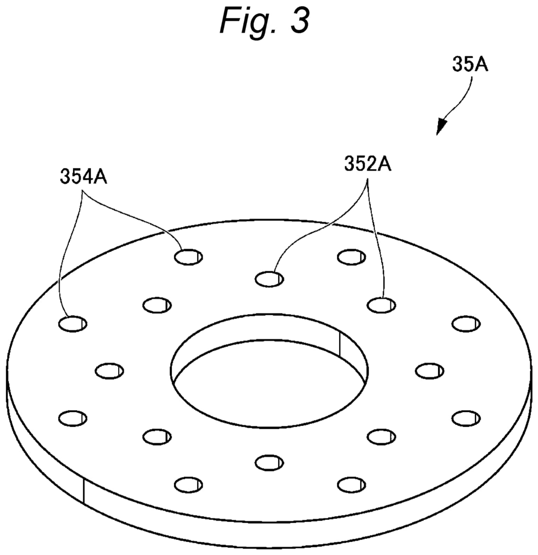

A preferable configuration of the end plates 35A and 35B will be described with reference to Figs. 3 to 5.

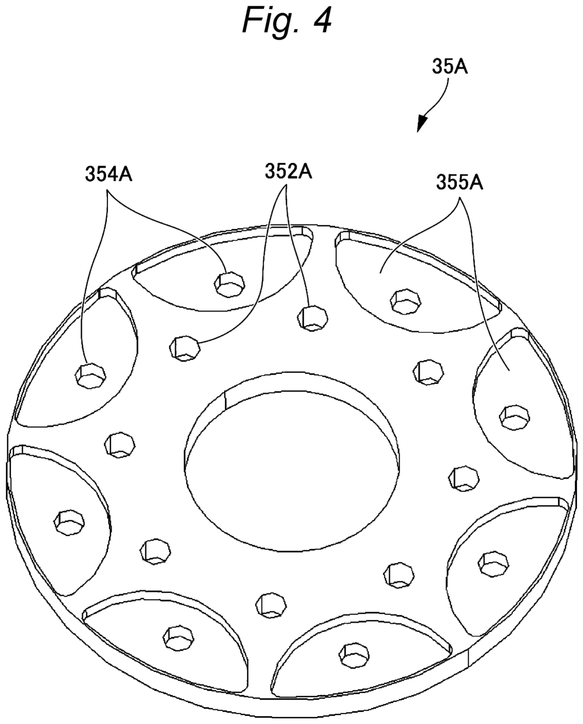

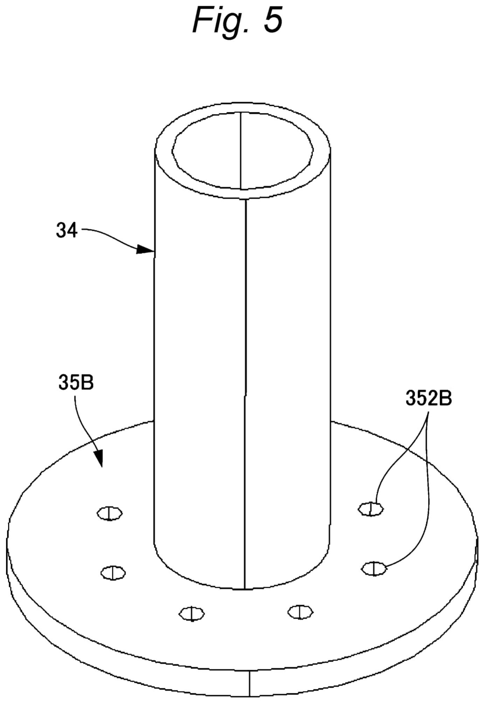

Fig. 3 is a perspective view of the end plate 35A when viewed from the axially outside, Fig. 4 is a perspective view of the end plate 35A when viewed from the axially inside, and Fig. 5 is a perspective view illustrating the end plate 35B integrated with the rotor shaft 34.

In the present embodiment, the end plate 35A has a through hole 352A in the axial direction, and the end plate 35B has a bottomed hole 352B in the axial direction. The bottomed hole 352B in the axial direction is formed on an inner side in the axial direction (facing the end plate 35A).

The through hole 352A and the bottomed hole 352B are formed at positions corresponding to the through hole 324 of the rotor core 32. That is, the through hole 352A and the bottomed hole 352B are provided along the circumferential direction in a mode in which the through hole 352A and the bottomed hole 352B overlap the through holes 324 of the rotor core 32 when viewed in the axial direction. Therefore, the through hole 352A and the bottomed hole 352B are axially continuous with the corresponding through hole 324. In the present embodiment, the resin material portion 70 extends not only to the through hole 324 but also to the through hole 352A and the bottomed hole 352B. That is, the resin material portion 70 extends into the through hole 352A and the bottomed hole 352B continuously from the inside of the through hole 324. In this case, the rotor core 32 and the end plates 35A and 35B can be coupled via the resin material portion 70. As a result, the rotational torque about the rotation axis 12 can be transmitted between the rotor core 32 and the end plates 35A and 35B. Therefore, for example, when the rotor core 32 and the rotor shaft 34 are key-fitted to each other, the resin material portion 70 can constrain the rotational degree of freedom of the end plate 35A with respect to the rotor core 32. When the end plate 35B is integrated with the rotor shaft 34 as in the present embodiment, the resin material portion 70 can increase the rotational torque that can be transmitted between the rotor core 32 and the rotor shaft 34.

In the present embodiment, as will be described later, the resin material is injected into the magnet holes 321 and 322 in a state where the end plate 35A is assembled to the rotor core 32. Therefore, the end plate 35A has a port hole 354A for injecting a resin material and a cavity 355A around the port.

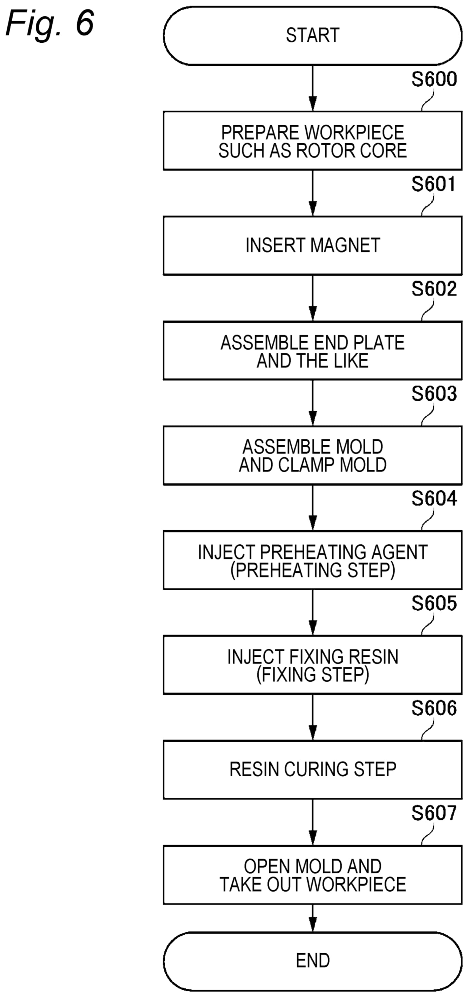

Next, a preferred embodiment of the method of manufacturing the rotor 30 will be described with reference to Fig. 6 and subsequent drawings.

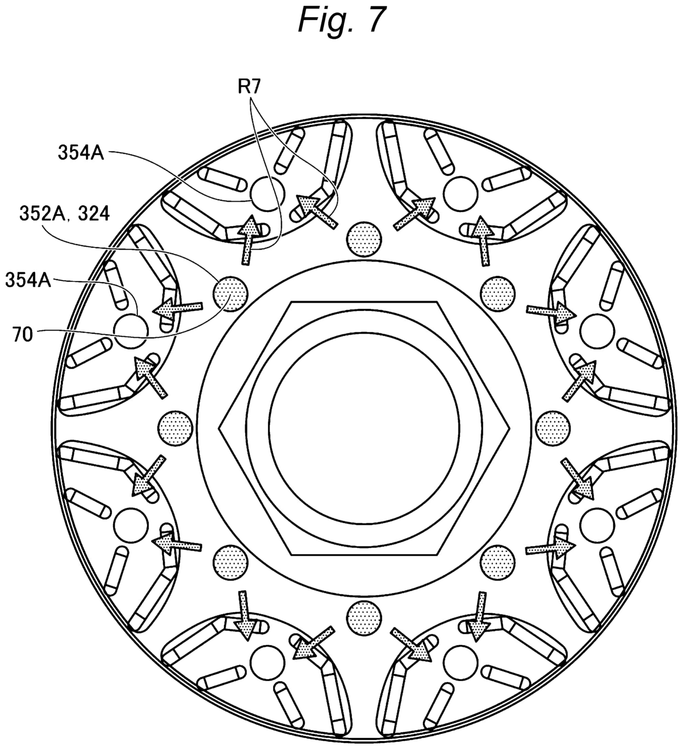

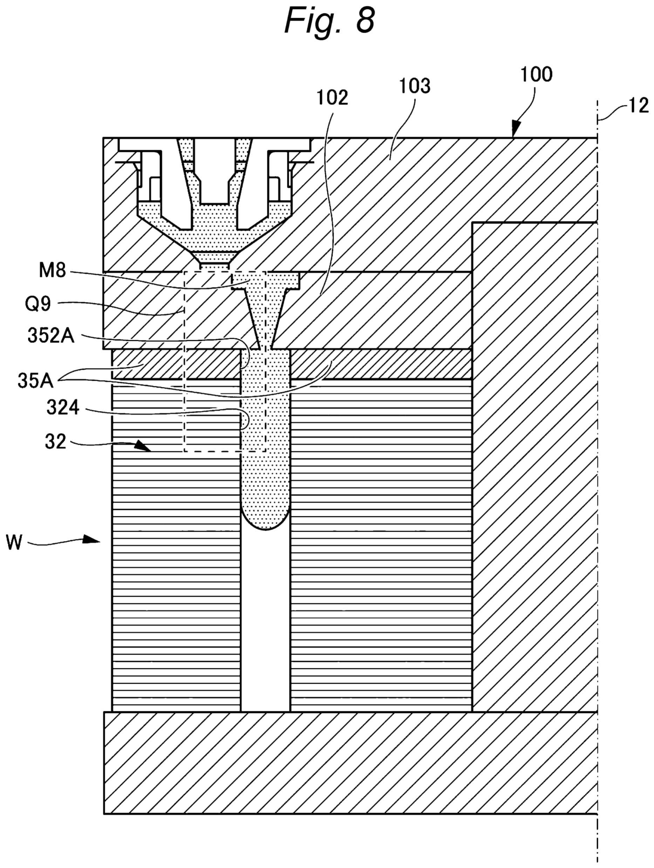

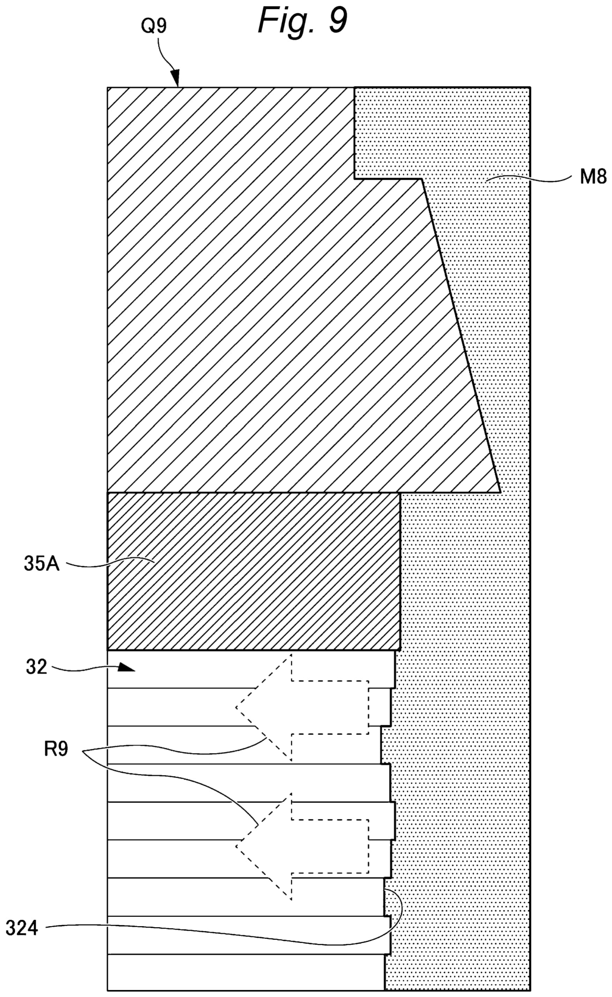

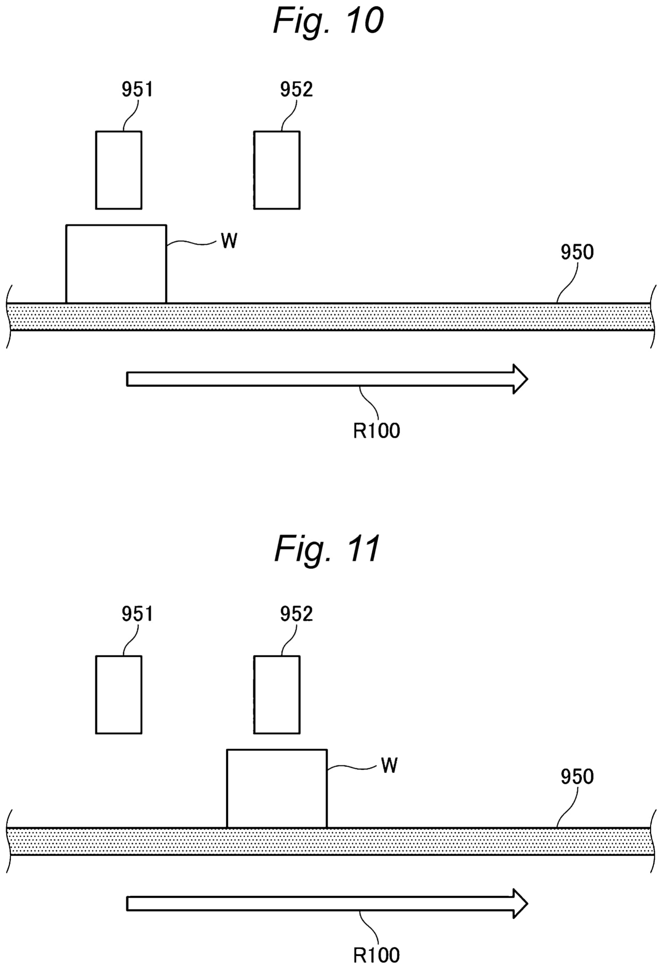

Fig. 6 is a schematic flowchart illustrating a flow of an example of a method of manufacturing the rotor 30. Fig. 6 relates to a manufacturing method in a case where the permanent magnets 61 and 62 are formed of sintered magnets. Figs. 7 to 9 are explanatory views of a heat transfer mode from the resin material for preheating to the rotor core 32, Fig. 7 is a plan view of a workpiece W viewed in the axial direction from the end plate 35A side, and Fig. 8 is a cross-sectional view of part of the workpiece W passing through one through hole 324, and part of a mold apparatus 100 is illustrated. Fig. 9 is an enlarged view of part Q9 in Fig. 8. Figs. 10 and 11 are explanatory diagrams of the positional relationship between the two injection molding machines 951 and 952 with respect to the workpiece W conveyed on a conveyance unit 950. Fig. 10 illustrates the positional relationship in the resin injection step (step S604), and Fig. 11 illustrates the positional relationship in the magnet fixing step (step S605).

The present manufacturing method first includes a step (step S600) of preparing a material to be handled by the present manufacturing method, the material being various components (rotor core 32, rotor shaft 34, end plate 35A, and the like) constituting the rotor 30. Note that the material related to the rotor core 32 may not be exactly the same as the rotor core 32 in a product state (for example, physical properties may be different due to the influence of heating or the like), but hereinafter, it is simply referred to as a "rotor core 32", and the same applies to the materials related to other components.

Next, the present manufacturing method includes a step (step S601) of inserting the sintered magnets related to the permanent magnets 61 and 62 into the magnet holes 321 and 322 of the rotor core 32 assembled to the rotor shaft 34 (and the end plate 35B).

Next, the present manufacturing method includes a step (step S602) of assembling the end plate 35A and the nut 36 to the rotor core 32. Hereinafter, the assembly formed by such assembling step is simply referred to as a "workpiece W".

Next, the present manufacturing method includes a step (step S603) of setting the workpiece W in the injection molding mold apparatus 100 (partially illustrated in Fig. 8) and closing and clamping the mold apparatus 100. Note that the configuration of the mold apparatus 100 is any configuration as long as it is a configuration that enables injection of a resin material to be described later.

Next, the present manufacturing method includes a resin injection step (step S604) of injecting a preheating resin material (molten state by heating) (an example of the first molten material) from the through hole 352A of the end plate 35A. The through hole 324 of the rotor core 32 is filled with the resin material injected into the through hole 352A and the resin material reaches the bottomed hole 352B of the end plate 35B. In the example illustrated in Fig. 8, the mold apparatus 100 includes a runner plate 102 assembled to the workpiece W, and a resin material (in Fig. 8, indicated by a hatched region M8) is injected through a hot runner 103 with a heater.

When the rotor core 32 is filled with such a resin material in the molten state, the heat of the resin material is transferred from the inside of the rotor core 32 to the entire rotor core 32. Specifically, as schematically indicated by an arrow R7 in Fig. 7, the heat of the resin material from each through hole 324 is transferred in the radial direction. At this time, since the plurality of through holes 324 is disposed along the circumferential direction, the radially outer side of the rotor core 32 can be heated over the entire circumferential direction. As schematically indicated by an arrow R9 in Fig. 9, such radial heat transfer occurs over the entire axial direction of the rotor core 32. In this manner, according to the present manufacturing method, the entire rotor core 32 can be efficiently heated (preheated) by the heat from the resin material in the molten state injected into the through hole 324.

When the rotor core 32 is formed by stacking electromagnetic steel plates, an insulating coating is formed on each electromagnetic steel plate. Since such an insulating coating reduces the heat conductivity of the rotor core 32, the time required to raise the temperature of the inside of the rotor core 32 to a desired temperature tends to be relatively long when the rotor core 32 is heated from the outside (surroundings).

On the other hand, according to the present manufacturing method, the rotor core 32 can be efficiently heated from the inside by the heat from the resin material filled with the rotor core 32. In addition, since the peripheral wall of the through hole 324 has no insulating coating, the rotor core 32 can be efficiently heated in a mode that is hardly affected by the insulating coating (see an arrow R9 in Fig. 9). In this manner, according to the present embodiment, it is possible to significantly shorten the time required to raise the temperature of the inside of the rotor core 32 to a desired temperature.

Since the through holes 324 are holes for receiving such a resin material for preheating into the rotor core 32, the number and the size of the through holes 324 (the volume of the entire through holes 324) may be adapted according to thermal energy required for preheating.

Next, the present manufacturing method includes a magnet fixing step (step S605) of injecting a resin material for fixing a magnet (molten state by heating) (an example of a second molten material) around the permanent magnets 61 and 62 of the magnet holes 321 and 322 through the port hole 354A of the end plate 35A. The magnet fixing step (step S605) is preferably performed a predetermined time after the previous resin injection step was ended (at the time of completion of injection of the resin material) (step S604). The predetermined time may correspond to a time until heat from the resin material reaches the entire rotor core 32 (that is, a time required for preheating). In this case, the magnet fixing step (step S605) can be performed when the rotor core 32 heated in the resin injection step (step S604) has a desired temperature. As a result, in the magnet fixing step (step S605), the required fluidity of the resin material for fixing the magnet can be secured in the magnet holes 321 and 322.

For example, as illustrated in Figs. 10 and 11, the resin injection step (step S604) and the magnet fixing step (step S605) may be sequentially and continuously performed on the workpiece W conveyed on the conveyance unit 950 such as a conveyor. In this case, as shown in Figs. 10 and 11, an injection molding machine 951 for the resin injection step (step S604) and an injection molding machine 952 for the magnet fixing step (step S605) may be disposed adjacent to each other in order from upstream in the conveyance direction of the conveyance unit 950 (see the arrow R100 in Figs. 10 and 11). As a result, the resin injection step (step S604) and the magnet fixing step (step S605) can be sequentially and efficiently performed while the workpiece W is conveyed by the conveyance unit 950. In this case, the above-described predetermined time (preferable interval from step S604 to step S605) can be easily realized by adjusting the conveyance speed of the workpiece W by the conveyance unit 950. In other words, the workpiece W can be moved to a position where the magnet fixing step (step S605), which is the next step, can be performed by the conveyance unit 950 using the predetermined time required for preheating, and the cycle time can be reduced.

Alternatively, in the modification, the workpiece W may not be moved between the resin injection step (step S604) and the magnet fixing step (step S605). For example, the resin injection step (step S604) and the magnet fixing step (step S605) may be performed while the workpiece W is fixed by moving the injection molding machine 951 and the injection molding machine 952 or by using a common injection molding machine. In this case, the decrease in temperature of the rotor core 32 due to the movement of the workpiece W can be suppressed.

Next, the present manufacturing method includes a step (step S606) of curing the resin material injected in the magnet fixing step (step S605). The resin material injected in the resin injection step (step S604) may be cured using the above-described predetermined time, or may be cured when the resin material injected in the magnet fixing step (step S605) is cured.

Here, in the present manufacturing method, the resin material injected in the resin injection step (step S604) may be the same as or different from the resin material injected in the magnet fixing step (step S605).

Next, the present manufacturing method includes a step (step S607) of opening the mold apparatus 100 and taking out the workpiece W.

Thus, according to the present manufacturing method, the resin injection step (step S604) is performed prior to the magnet fixing step (step S605), so that the resin injection step (step S604) can be used as the preheating step. As a result, the preheating step to be performed prior to the magnet fixing step (step S605) can be realized without using a heating device, a furnace, or the like that heats the rotor core 32 from around. Alternatively, it is possible to simplify the preheating step of heating the rotor core 32 from around (for example, reduction in preheating time, downsizing of a heating device, and the like).

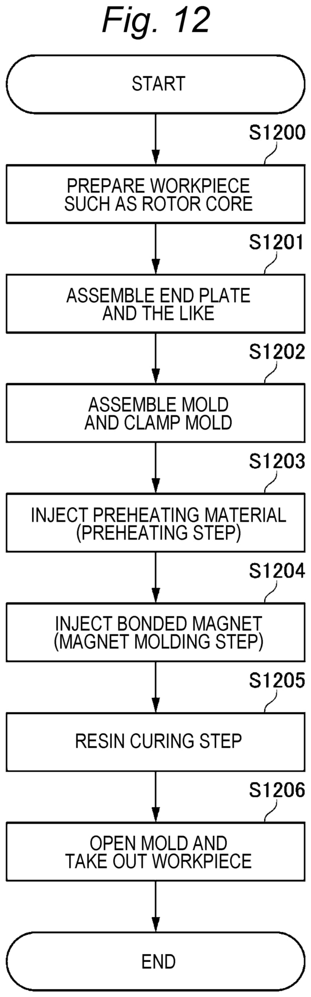

Fig. 12 is a schematic flowchart illustrating a flow of another example of the method of manufacturing the rotor 30. Fig. 12 relates to a manufacturing method in a case where the permanent magnets 61 and 62 are formed of bonded magnets.

The present manufacturing method first includes a step (step S1200) of preparing a material to be handled by the present manufacturing method, the material being various components (rotor core 32, rotor shaft 34, end plate 35A, and the like) constituting the rotor 30.

Next, the present manufacturing method includes a step (step S1201) of assembling the end plate 35A and the nut 36 to the rotor core 32. Hereinafter, the assembly formed by such assembling step is simply referred to as a "workpiece W".

Next, the present manufacturing method includes a step (step S1202) of setting the workpiece W in the injection molding mold apparatus 100 (partially illustrated in Fig. 8) and closing and clamping the mold apparatus 100. Note that the configuration of the mold apparatus 100 is any configuration as long as it is a configuration that enables injection of a resin material to be described later.

Next, the present manufacturing method includes a resin injection step (step S1203) of injecting a preheating resin material (molten state by heating) into the through hole 324 of the rotor core 32 via the through hole 352A of the end plate 35A, as in step S604 in Fig. 6. The through hole 324 of the rotor core 32 is filled with the resin material injected into the through hole 324, and the resin material reaches the bottomed hole 352B of the end plate 35B.

When the rotor core 32 is filled with such a resin material in the molten state, the heat of the resin material is transferred from the inside of the rotor core 32 to the entire rotor core 32 as described above with reference to step S604 of Fig. 6. In this manner, also by the present manufacturing method, the entire rotor core 32 can be efficiently heated (preheated) by the heat from the resin material in the molten state injected into the through hole 324.

Next, the present manufacturing method includes a magnet molding step (step S1204) of injecting a bonded magnet material (molten state by heating) into the magnet holes 321 and 322 through the port holes 354A of the end plate 35A. The magnet molding step (step S1204) is preferably performed a predetermined time after the previous resin injection step was ended (at the time of completion of injection of the resin material) (step S1203). The predetermined time may correspond to the time (that is, the time required for preheating) until the heat from the resin material reaches the entire rotor core 32 as described above with reference to steps S604 and S605 in Fig. 6. Also in the case of the present manufacturing method, as in the case of the manufacturing method described above with reference to Fig. 6, as shown in Figs. 10 and 11, the resin injection step (step S1203) and the magnet molding step (step S1204) may be sequentially and continuously performed on the workpiece W conveyed on the conveyance unit 950 such as a conveyor. Alternatively, in the modification, the workpiece W may not be moved between the resin injection step (step S1203) and the magnet molding step (step S1204).

Next, the present manufacturing method includes a step (step S1205) of curing the resin material injected in the magnet molding step (step S1204). The resin material injected in the resin injection step (step S1203) may be cured using the above-described predetermined time, or may be cured when the resin material injected in the magnet molding step (step S1204) is cured.

Here, in the present manufacturing method, the resin material injected in the resin injection step (step S1203) may be the same as or different from the resin material injected in the magnet molding step (step S1204).

Next, the present manufacturing method includes a step (step S1206) of opening the mold apparatus 100 and taking out the workpiece W.

In this manner, the present manufacturing method also achieves effects similar to those of the manufacturing method described above with reference to Fig. 6.

Although each embodiment is described in detail above, the present invention is not limited to a specific embodiment, and various modifications and changes can be made within the scope described in the claims. In addition, all or a plurality of the components of the above-described embodiments can be combined.

For example, in the above-described embodiment, a metal material portion may be provided instead of the resin material portion 70. In this case, the metal material portion can be formed by injecting the metal material in the molten state into the workpiece W in the same mode as in the case of forming the resin material portion 70 in the same step as in the case of forming the resin material portion 70. Also in this case, since the preheating by the metal material in the molten state can be realized, the same effect as that of the above-described embodiment is obtained.

Further, in the above-described embodiment, when the permanent magnets 61 and 62 are formed of bonded magnets, the bonded magnets are formed by injecting a bonded magnet material (molten state by heating) into the magnet holes 321 and 322 as illustrated in Fig. 12, but the present invention is not limited thereto. A bonded magnet formed and solidified outside (external to magnet holes 321, 322) may be used. In this case, the bonded magnet solidified outside may be fixed to the magnet holes 321 and 322 in the same manner as the sintered magnet.

Furthermore, in the above-described embodiment, the resin material injected in the resin injection step (step S1203) is blocked by the bottomed hole 352B of the end plate 35B, but may be configured to be flowable from the bottomed hole 352B to the discharge port. In this case, the amount of the resin material that can be injected in the resin injection step (step S1203) can be increased, and the thermal energy for preheating can be increased. In such a configuration, the resin material injected in the resin injection step (step S1203) preferably has a melting point higher than that of the resin material injected in the magnet molding step (step S1204). This is because when the melting point of the resin material injected in the resin injection step (step S1203) is lower than the melting point of the resin material injected in the magnet molding step (step S1204), there is a possibility that part of the resin material flows out from the through hole 324 in the magnet molding step (step S1204).

In the above-described embodiment, the end plate 35B has the bottomed hole 352B, but may have a through hole instead of the bottomed hole 352B. In such a configuration, the resin material injected in the resin injection step (step S1203) preferably has a melting point higher than that of the resin material injected in the magnet molding step (step S1204). This is because when the melting point of the resin material injected in the resin injection step (step S1203) is lower than the melting point of the resin material injected in the magnet molding step (step S1204), there is a possibility that part of the resin material flows out from the through hole 324 in the magnet molding step (step S1204). In a case where the melting point of the resin material injected in the resin injection step (step S1203) is higher than the melting point of the resin material injected in the magnet molding step (step S1204), the resin material injected in the resin injection step (step S1203) is not melted by the temperature of the rotor core 32 caused by the magnet molding step (step S1204) and can stay in the through hole 324.

Furthermore, in the above-described embodiment, the resin injection step (step S1203) can eliminate the need for a core preheating step using another heating device, but may be performed in cooperation with such a core preheating step in a modification. In this case, the another heating device may be provided around the rotor core 32, and heats the rotor core 32 from the outside (surroundings) of the rotor core 32. The another heating device may be in the form of a furnace.

In addition, in the above-described embodiment, injection of the resin material into the magnet holes 321 and 322 is performed in a state where the end plate 35A is assembled to the rotor core 32, but the present invention is not limited thereto. In this case, the end plate 35A may not have the through hole 352A, and may be assembled immediately before the magnet fixing step (step S605) or the magnet molding step (step S1204). Alternatively, the end plate 35A may not have the port hole 354A for injecting the resin material or the cavity 355A around the port, and may be assembled after the magnet fixing step (step S605) or the magnet molding step (step S1204).

In the above-described embodiment, the end plate 35B is formed integrally with the rotor shaft 34, but may be formed separately from the rotor shaft 34.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method of manufacturing a rotation electric machine rotor, the method comprising:
a step of preparing a rotor core (32) having an annular shape when viewed in an axial direction and having a magnet hole (321, 322) in the axial direction and a first through hole (324) in the axial direction;
an injection step of injecting a first molten material brought into a molten state by heating into the first through hole (324); and
a magnet disposing step of disposing a permanent magnet (61, 62) in the magnet hole (321, 322) by injecting a second molten material brought into a molten state by heating into the magnet hole (321, 322) after the injection step, wherein
the magnet disposing step includes fixing a magnet for the permanent magnet (61, 62) inserted into the magnet hole (321, 322) in the magnet hole (321, 322) as the second molten material is cured, or forming a bonded magnet for the permanent magnet (61, 62) in the magnet hole (321, 322) as the second molten material containing a magnet powder is cured.

2. The method of manufacturing a rotation electric machine rotor according to Claim 1, wherein the magnet disposing step is performed in a state where a temperature of the rotor core (32) is increased by heat from the first molten material injected in the injection step.

3. The method of manufacturing a rotation electric machine rotor according to Claim 1 or 2, wherein a melting point of the first molten material is higher than a melting point of the second molten material.

4. The method of manufacturing a rotation electric machine rotor according to any one of Claims 1 to 3, the method further comprising:
a step of preparing an end plate (35A, 35B) having a second through hole (352A) or a bottomed hole (352B) in the axial direction; and
a setting step of setting the end plate (35A, 35B) on an axial end face of the rotor core (32) in a relationship in which the second through hole (352A) or the bottomed hole (352B) of the end plate (35A, 35B) overlaps the first through hole (324) of the rotor core (32) when viewed in the axial direction, wherein
the injection step is performed after the setting step, and includes injecting the first molten material into the second through hole (352A) or the bottomed hole (352B).

5. The method of manufacturing a rotation electric machine rotor according to any one of Claims 1 to 4, wherein the rotor core (32) is formed by stacking a plurality of steel plates in the axial direction.

6. A rotation electric machine rotor comprising:
a rotor core (32) having an annular shape when viewed in an axial direction and having a magnet hole (321, 322) in the axial direction and a first through hole (324) in the axial direction;
a sintered magnet fixed to the magnet hole (321, 322) with a fixing resin or a bonded magnet disposed in the magnet hole (321, 322); and
a material curing unit formed in the first through hole (324) and formed by curing a molten material brought into a molten state by heating.

7. The rotation electric machine rotor according to Claim 6, further comprising:
an end plate (35A, 35B) disposed on an axial end face of the rotor core (32) and having a second through hole (352A) or a bottomed hole (352B) in the axial direction, wherein
the first through hole (324) of the rotor core (32) and the second through hole (352A) or the bottomed hole (352B) of the end plate (35A, 35B) overlap each other when viewed in the axial direction, and wherein
the material curing unit is formed continuously in the first through hole (324), and the second through hole (352A) or the bottomed hole (352B), in the axial direction.
